# EUROPEAN PATENT APPLICATION

(11) **EP 4 451 450 A1**
(43) Date of publication of application: **23.10.2024**
(21) Application number: 23799605.3
(22) Date of filing: 24.04.2023
(51) Int. Cl.: H01M 50/451, H01M 50/446, H01M 50/489, H01M 10/052

(54) **ORGANIC/INORGANIC COMPOSITE POROUS COATING LAYER-CONTAINING SEPARATOR FOR ELECTROCHEMICAL DEVICE, AND ELECTROCHEMICAL DEVICE COMPRISING SAME**

(30) Priority: 03.05.2022 KR 20220054734; 19.05.2022 KR 20220061568
(71) Applicant: LG Energy Solution, Ltd., Seoul 07335 (KR)
(72) Inventor: KIM, Hye Won, Daejeon 34122 (KR); KIM, Min Ji, Daejeon 34122 (KR); LEE, Seung Hyun, Daejeon 34122 (KR); KA, Kyung Ryun, Daejeon 34122 (KR)
(74) Representative: Hoffmann Eitle
(86) International application number: PCT/KR2023/005527
(87) International publication number: WO 2023/214722

(57) **Abstract**

Proposed is an electrochemical device separator including a porous polymer substrate and a porous organic/inorganic composite coating layer formed on at least one side of the polymer substrate. The porous organic/inorganic composite coating layer includes particulate binder polymers and inorganic particles. The particulate binder polymers include hybrid polymer particles of a fluorine-based polymer and an acrylic polymer and acrylic polymer particles. The porous organic/inorganic composite coating layer has the heterogeneity in composition morphology in a thickness direction, in which a content ratio of hybrid polymer particles/acrylic polymer particles present on a surface portion opposite to a surface in contact with the polymer substrate is greater than a content ratio of hybrid polymer particles/acrylic polymer particles present inside the porous organic/inorganic composite coating layer.

## Description

### TECHNICAL FIELD

The present application claims priority to Korean Patent Application No. 10-2022-0054734, filed May 3, 2022 and Korean Patent Application No. 10-2022-0061568, filed May 19, 2022, respectively, the entire contents of which is incorporated herein for all purposes by this reference. The present disclosure relates to an electrochemical device separator being improved in dry adhesion force (adhesion in a dry state) and wet adhesion force (adhesion in a state of being impregnated with an electrolyte).

### BACKGROUND ART

Electrochemical devices such as lithium secondary batteries are generally primarily composed of a positive electrode, a separator, a negative electrode, and /an electrolyte solution. Electrochemical devices are high-density energy storage devices capable of charged and discharged through reversible conversion between chemical energy and electrical energy and are widely used in small electronic devices, such as mobile phones, laptop computers, and the like. Recently, applications of electrochemical devices have rapidly expanded to hybrid electric vehicles (HEVs), plug-in EVs, electric bicycles, and energy storage systems (ESSs) to deal with environmental problems, high oil prices, energy efficiency, and energy storage.

In the manufacture and use of such a lithium secondary battery, securing the safety of the lithium secondary battery is an important task to solve. In particular, a separator generally used in an electrochemical device shows extreme heat shrinkage behavior in a high temperature or the like due to material characteristics and manufacturing process characteristics thereof, thereby causing an internal short circuit. Recently, to ensure the stability of a lithium secondary battery, an organic/inorganic composite porous separator in which a porous organic/inorganic composite coating layer is formed by coating a porous polymer substrate with a mixture of inorganic particles and a binder resin has been proposed. However, when an electrode assembly is formed by laminating an electrode and a separator, there is a high risk that the electrode and the separator may be separated due to insufficient adhesion force, and in this case, inorganic particles deintercalated during the separation process may act as a local defect in the device. Accordingly, a separator in which an acrylic polymer binder is applied to a porous organic/inorganic composite coating layer to improve adhesion force between an electrode and the separator has been proposed, and a dry adhesion force is improved when an acrylic polymer binder is used, but there is a problem in that the wet adhesion force is reduced due to problems such as swelling or dissolution of the acrylic polymer binder by the electrolyte after application to the battery.

As such, it is required to develop a separator that maintains a high adhesion force from the time of manufacturing a separator including a porous organic/inorganic composite coating layer to the application of a battery.

### SUMMARY OF THE INVENTION

### TECHNICAL PROBLEM

An objective of the present disclosure is to provide an organic/inorganic composite porous separator having improved binding force with an electrode in both a dry state and a wet state.

In addition, another objective of the present disclosure is to provide a separator in which inorganic particles are not detached from the porous organic/inorganic composite coating layer, and high durability and dielectric property are maintained.

Other objectives and advantages of the present disclosure will be understood by the following description. On the other hand, it will be easily understood that the objects and advantages of the present disclosure can be realized by means or methods described in the claims and combinations thereof.

### TECHNICAL SOLUTION

A first aspect of the present disclosure relates to a separator for an electrochemical device, the separator includes a porous polymer substrate and a porous organic/inorganic composite coating layer formed on at least one side of the polymer substrate,
in which the porous organic/inorganic composite coating layer includes particulate binder polymers and inorganic particles. The particulate binder polymers include mixed polymer particles of a fluorine-based polymer and an acrylic-based polymer and acrylic-based polymer particles, wherein the acrylic-based polymer comprised in the mixed polymer particles does not include styrene repeating unit, the acrylic-based polymer comprised in the acrylic-based polymer particles includes styrene repeating unit and the porous organic/inorganic composite coating layer has the heterogeneity in composition morphology in a thickness direction, in which the content ratio of hybrid polymer particles/acrylic polymer particles present on a surface portion opposite to the surface in contact with the polymer substrate is greater than the content ratio of hybrid polymer particles/acrylic polymer particles present inside the porous organic/inorganic composite coating layer.

A second aspect of the present disclosure is that, in the first aspect, the porous organic/inorganic composite coating layer has the heterogeneity in a composition morphology in a thickness direction, in which the content of hybrid polymer particles present on a surface portion opposite to the surface in contact with the polymer substrate is greater than the content of hybrid polymer particles present inside the porous organic/inorganic composite coating layer.

A third aspect of the present disclosure is that, in the second aspect, the porous organic/inorganic composite coating layer has the heterogeneity in composition morphology in a thickness direction, in which the content of acrylic polymer particles present on a surface portion opposite to the surface in contact with the polymer substrate is greater than the content of acrylic polymer particles present inside the porous organic/inorganic composite coating layer.

A fourth aspect of the present disclosure is that, in any one of the first to third aspects, the average particle diameter (D50) of the hybrid polymer particles is smaller than the average particle diameter (D50) of the acrylic polymer particles.

A fifth aspect of the present disclosure is that, in the fourth aspect, the average particle diameter (D50) of the hybrid polymer particles is in a range of 100 to 500 nm, and the average particle diameter (D50) of the acrylic polymer particles is in a range of 200 to 700 nm. More specifically, the average particle diameter (D50) of the hybrid polymer particles is in a range of 200 to 400 nm, and the average particle diameter (D50) of the acrylic polymer particles is in a range of 300 to 500 nm.

A sixth aspect of the present disclosure is that, in any one of the first to fifth aspects, the mixed weight ratio of the hybrid polymer particles and the acrylic polymer particles is 8:2 to 2: 8.

A seventh aspect of the present disclosure is that, in any one of the first to sixth aspects, the Tg of the acrylic polymer included in the hybrid polymer particles is more than 10°C lower than the Tg of the acrylic polymer included in the acrylic polymer particles. More specifically, the Tg of the acrylic polymer included in the hybrid polymer particles is 10°C to 30°C, and the Tg of the acrylic polymer included in the acrylic polymer particles is 30°C to 50°C.

An eighth aspect of the present disclosure is that, in any one of the first to seventh aspects, the fluorine-based polymer is a homopolymer of vinylidene fluoride, a copolymer of vinylidene fluoride and other polymerizable monomers, or a mixture of two or more thereof.

A ninth aspect of the present disclosure is that, in any one of the first to eighth aspects, the monomer is at least one selected from the group consisting of tetrafluoroethylene, hexafluoropropylene, trifluoroethylene, chlorofluoroethylene, 1,2 difluoroethylene, perfluoro(methylvinyl)ether, perfluoro(ethylvinyl)ether, perfluoro(propylvinyl)ether, perfluoro(1,3 dioxole), perfluoro (2,2-dimethyl-1,3-dioxole), trichloroethylene, and vinyl fluoride.

A tenth aspect of the present disclosure is that, in any one of the first to ninth aspects, the fluorine-based polymer is a copolymer of vinylidene fluoride and hexafluoropropylene.

An eleventh aspect of the present disclosure is that, in any one of the first to tenth aspects, the content of the monomer is 1% to 20% by weight of the copolymer.

A twelfth aspect of the present disclosure is that, in any one of the first to eleventh aspects, the acrylic polymer constituting the hybrid polymer particles and the acrylic polymer constituting the acrylic polymer particles each independently include an alkyl methacrylate repeating unit having an alkyl group having 1 to 18 carbon atoms.

A thirteenth aspect of the present disclosure is that, in any one of the first to twelfth aspects, the porous organic/inorganic composite coating layer includes the particulate binder resin in an amount of 1% to 30% by weight of the porous organic/inorganic composite coating layer.

A fourteenth aspect of the present disclosure is that, in any one of the first to thirteenth aspects, the average particle diameter (D50) of the inorganic particles has in a range of 200 nm to 3 um.

A fifteenth aspect of the present disclosure is that, in any one of the first to fourteenth aspects, the porous organic/inorganic composite coating layer is formed by coating and drying a slurry in which the particulate binder polymers and inorganic particles are dispersed in an aqueous dispersion medium on at least one surface of a porous polymer substrate.

A sixteenth aspect of the present disclosure relates to an electrochemical device, in which the electrochemical device includes a negative electrode, a positive electrode, and a separator interposed between the negative electrode and the positive electrode, and the separator is according to any one of the first to fourteenth aspects.

A seventeenth aspect of the present disclosure is that, in the sixteenth aspect, the electrochemical device is a lithium secondary battery.

### Advantageous Effects

The porous organic/inorganic composite coating layer of the separator, according to the present disclosure, includes hybrid polymer particles of fluorine-based polymer and acrylic polymer and acrylic polymer particles. At the same time, the porous organic/inorganic composite coating layer has the heterogeneity in composition morphology in a thickness direction, in which the content ratio of hybrid polymer particles/acrylic polymer particles present on the surface portion opposite to the surface in contact with the polymer substrate is greater than the content ratio of hybrid polymer particles/acrylic polymer particles present inside the porous organic/inorganic composite coating layer.

According to the present disclosure, the content ratio of the hybrid polymer particles/acrylic polymer particles present on the surface portion opposite to the surface of the porous organic/inorganic composite coating layer in contact with the polymer substrate is greater than the content ratio of hybrid polymer particles/acrylic polymer particles present inside the porous organic/inorganic composite coating layer. Since the fluorine-based polymer included in the hybrid polymer particles is insoluble in the electrolyte, the hybrid polymer particles retain their shape even if they are soaked in the electrolyte, even if the acrylic polymer is included at the same time. Accordingly, the separator of the present disclosure maintains the adhesion force with the electrode without significantly losing the adhesion force with the electrode even in a wet state. On the other hand, the acrylic polymer particles further contribute to maintaining the adhesion force of the separator to the electrode in a dry state.

Accordingly, in the roll-to-roll continuous process of manufacturing the electrode assembly by laminating the electrode and the separator of the present disclosure, the shape stability and processability of the electrode assembly are improved. In addition, since a battery is manufactured using an electrode assembly including the separator, a high binding force between the separator and the electrode can be maintained even when the battery is impregnated with an electrolyte, and interfacial resistance characteristics are not deteriorated. In addition, since the binder resin particles maintain high adhesion force in a dry or wet state, the inorganic particles included in the porous organic/inorganic composite coating layer are not detached and are well fixed so that the morphological stability of the separator can be improved. Accordingly, there is an effect of improving the thermal stability and dielectric property of the battery.

Furthermore, in case that the acrylic-based polymer comprised in the mixed polymer particles does not include styrene repeating unit, the acrylic-based polymer comprised in the acrylic-based polymer particles includes styrene repeating unit, the adhesion between the porous polymer substrate and the porous organic/inorganic composite coating layer increases.

### BRIEF DESCRIPTION OF THE DRAWINGS

The accompanying drawings illustrate preferred embodiments of the disclosure, and together with the detailed description, explain the principles of the disclosure, but the scope of the disclosure is not limited thereto. On the other hand, the shape, size, scale, or ratio of elements in the drawings included in this specification may be exaggerated to emphasize a clearer description.
FIG. 1 is a schematic diagram showing a cross-section of a separator according to a specific embodiment of the present disclosure;

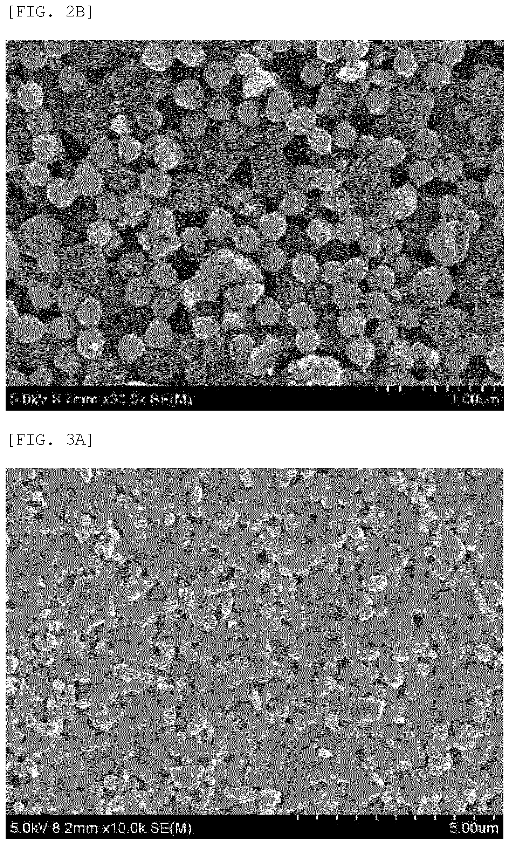

FIG. 2a shows a SEM image of the surface of the separator of Example 1 before the electrolyte impregnation, and FIG. 2b is a partially enlarged view of FIG. 2a;
FIG. 3a shows an SEM image of the surface of the separator of Comparative Example 1, and FIG. 3b is a partially enlarged view of FIG. 3a;
FIG. 4 is a SEM image of a cross-section of the separator of Example 1; and
FIG. 5 is an EDS image of a cross-section of the separator of Example 1.

### DESCRIPTION OF THE PREFERRED EMBODIMENTS

Terms or words used in the specification and claims should not be construed as conventional or dictionary meanings, but should be construed as meanings and concepts conforming to the technical idea of this invention based on the principle that the inventor can appropriately define the concept of terms to describe his invention in the best way. Therefore, since the configurations described in the embodiments described herein are only the most preferred embodiments of the present disclosure and do not represent all the technical ideas of the present disclosure, it should be understood that there may be various equivalents and modifications that may replace them at the time of the present application.

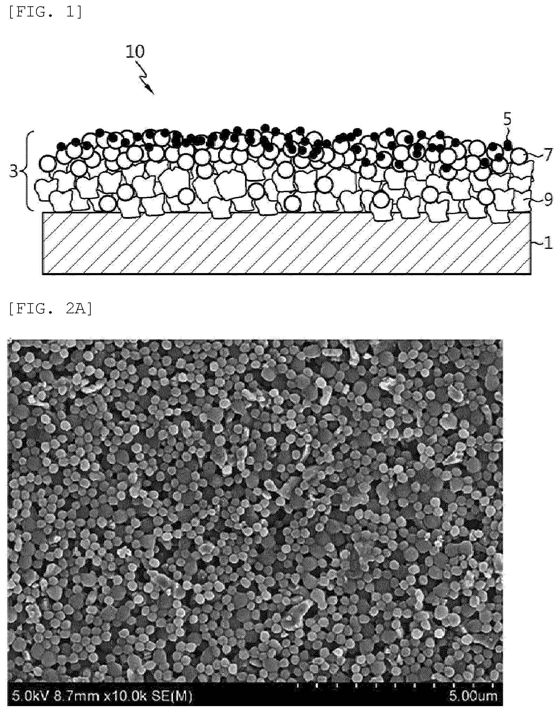

FIG. 1 is a schematic diagram showing a cross-section of a separator 10 for an electrochemical device according to a specific embodiment of the present disclosure.

In the present disclosure, the separator 10 includes a porous polymer substrate 1 and a porous organic/inorganic composite coating layer 3 formed on at least one side of the polymer substrate. Although FIG. 1 shows that the porous organic/inorganic composite coating layer 3 is formed only on one side surface of the polymer substrate 1, the porous organic/inorganic composite coating layer 3 may also be formed on the other side surface of the polymer substrate 1.

The porous organic/inorganic composite coating layer 3 includes particulate binder polymers 5 and 7 and inorganic particles 9. The particulate binder polymers 5 and 7 include hybrid polymer particles 5 of a fluorine-based polymer and an acrylic polymer and acrylic polymer particles 7.

In the present disclosure, the acrylic-based polymer comprised in the mixed polymer particles does not include styrene repeating unit, the acrylic-based polymer comprised in the acrylic-based polymer particles includes styrene repeating unit. Specifically, the expression of "not include styrene repeating unit" means that not comprising styrene compound as a monomer, copolymer including styrene repeating unit or polymer including styrene repeating unit in the process of polymerizing the acrylic-based polymer comprised in the mixed polymer particles or polymerizing the acrylic-based polymer comprised in the acrylic-based polymer particles.

As shown in FIG. 1, the porous organic/inorganic composite coating layer 3 has the heterogeneity in composition morphology in a thickness direction, in which the content ratio of hybrid polymer particles 5/ acrylic polymer particles 7 present on a surface portion opposite to the surface in contact with the polymer substrate 1 is greater than the content ratio of hybrid polymer particles 5/ acrylic polymer particles 7 present inside the porous organic/inorganic composite coating layer.

In the specification of the present disclosure, "the heterogeneity of composition morphology in a thickness direction, in which the content ratio of hybrid polymer particles/acrylic polymer particles present on the surface portion opposite to the surface in contact with the polymer substrate is greater than the content ratio of hybrid polymer particles/acrylic polymer particles present inside the porous organic/inorganic composite coating layer", in which if the content ratio of hybrid polymer particles/acrylic polymer particles present on the surface portion of the porous organic/inorganic composite coating layer opposite to the surface in contact with the polymer substrate is greater than the content ratio of hybrid polymer particles/acrylic polymer particles present under the surface portion (inside) of the porous coating layer, it should be interpreted that any aspect is included. For example, it should be interpreted as a meaning including all of the porous coating layer formed so that the content ratio of the hybrid polymer particles/acrylic polymer particles decreases linearly from the surface of the porous coating layer to the porous substrate, the porous coating layer formed so that the content ratio of the hybrid polymer particles/acrylic polymer particles non-linearly decreases from the surface of the porous coating layer to the porous substrate, and the porous coating layer formed so that the content ratio of the hybrid polymer particles/acrylic polymer particles discontinuously decreases from the surface of the porous coating layer to the porous substrate, etc.

As such, the content ratio of the hybrid polymer particles/acrylic polymer particles present on the surface portion opposite to the surface of the porous organic/inorganic composite coating layer in contact with the polymer substrate is greater than the content ratio of hybrid polymer particles/acrylic polymer particles present inside the porous organic/inorganic composite coating layer. Since the fluorine-based polymer included in the hybrid polymer particles is insoluble in the electrolyte, the hybrid polymer particles retain their shape even if they are soaked in the electrolyte, even if the acrylic polymer is included at the same time. Accordingly, the separator of the present disclosure maintains the adhesion force with the electrode without significantly losing the adhesion force with the electrode even in a wet state. On the other hand, the acrylic polymer particles further contribute to maintaining the adhesion force of the separator to the electrode in a dry state.

The porous organic/inorganic composite coating layer 3 may have the heterogeneity in composition morphology in a thickness direction, in which the content of hybrid polymer particles 5 present on a surface portion opposite to the surface in contact with the polymer substrate 1 is greater than the content of hybrid polymer particles 5 present inside the porous organic/inorganic composite coating layer. In addition, the porous organic/inorganic composite coating layer 3 may have the heterogeneity in composition morphology in a thickness direction, in which the content of acrylic polymer particles 7 present on a surface portion opposite to the surface in contact with the polymer substrate 1 is greater than the content of acrylic polymer particles 7 present inside the porous organic/inorganic composite coating layer 3.

As such, when the hybrid polymer particles 5 and/or the acrylic polymer particles 7 have the heterogeneity in the composition morphology of the above-described form in the thickness direction, the polymer particles 5 and 7 are more present on the surface portion opposite to the surface in contact with the polymer substrate 1 than inside the porous organic/inorganic composite coating layer 3. Therefore, due to the adhesion force characteristics of the polymer particles present on the surface being large, the dry/wet adhesion force to the electrode increases. In addition, resistance to external stimuli such as peeling and scratching is increased, and lamination characteristics of the electrode are improved. Accordingly, very excellent characteristics may be exhibited in a battery assembly process such as winding and lamination. In addition, since the porosity is improved due to the inorganic particles that increase toward the inside, excellent ionic conductivity characteristics can be exhibited, thereby contributing to the improvement of battery performance.

According to a specific embodiment of the present disclosure, the porous polymer substrate 1 is capable of providing a movement path of lithium ions while preventing a short circuit by electrically insulating the negative electrode and the positive electrode and may be used without particular limitation as long as it is generally used as a separator polymer substrate of an electrochemical device. As examples of the separator substrate, for example, a porous polymer film or nonwoven fabric including at least one of the polymer resins among polyolefins such as polyethylene, polyethylene terephthalate, polybutylene terephthalate, polyacetal, polyamide, polycarbonate, polyimide, polyether ether ketone, polyether sulfone, polyphenylene oxide, polyphenylene sulfide, and polyethylene naphthalate can be used.

In the present disclosure, the thickness of the polymer substrate may be 3 to 50 µm. Although the range of the separator substrate is not particularly limited to the aforementioned range, if the thickness is too thin than the above-described lower limit, mechanical properties are lowered, and the separator may be easily damaged during the use of battery. Meanwhile, the pore size and porosity present in the separator substrate are also not particularly limited but may be 0.01 to 50 um and 10 to 95 vol%, respectively.

The porous organic/inorganic composite coating layer 3 is made by mixing a plurality of inorganic particles 9 and particulate binder polymers 5 and 7. Since the polymer substrate 1 is coated by the porous coating layer 3 including inorganic particles 9, heat resistance and mechanical properties of the separator 10 may be further improved. According to a preferred embodiment of the present disclosure, the porous organic/inorganic composite coating layer 3 is disposed on both sides of the polymer substrate 1. As described above, by forming the porous coating layer 3 on both sides of the porous substrate 1, wet adhesion force and dry adhesion force between the positive electrode and the separator and between the negative electrode and the separator can be improved.

The porous organic/inorganic composite coating layer 3 may have a microporous structure due to an interstitial volume between the constituent inorganic particles 9 and the particulate binder polymers 5 and 7. The inorganic particles 9 serve as a kind of spacer capable of maintaining the physical shape of the porous coating layer 3. The interstitial volume refers to a space limited by substantially being in surface contact with the particles of the inorganic particles 9 and the particulate binder polymers 5 and 7. In addition, since the inorganic particles 9 generally have characteristics that do not change their physical properties even at a high temperature of 200°C or higher, the separator 10 has excellent heat resistance by the porous organic/inorganic composite coating layer 3. In the present disclosure, the porous organic/inorganic composite coating layer 3 may have a thickness in a range of 1 to 50 µm, 2 to 30 µm, or 2 to 20 µm based on what is formed on either side of the porous substrate 1.

In the present disclosure, when forming the porous coating layer 3, the particulate binder polymers 5 and 7 are added to the dispersion medium in the form of particles to be coated and dried to maintain the particle shape, and thus the particulate binder polymers are distinguished from non-particulate binder polymer that is coated and dried in a solvent dissolved state.

In one embodiment of the present disclosure, the particulate binder polymers 5 and 7 may be present in an amount of about 90% by weight or more or about 99% by weight or more based on the binder components present in the porous coating layer 3. In the present specification, the particulate binder polymers 5 and 7 may be referred to as polymer particles, resin particles, or binder particles. The particulate binder polymers 5 and 7 form a porous coating layer 3 having a layered structure through the adhesion between the inorganic particles 9 and mutual adhesion between the inorganic particles 9 and the polymer substrate 1.

In the present disclosure, the average particle diameter (D50) of the hybrid polymer particles may be smaller than the average particle diameter (D50) of the acrylic polymer particles. By making the hybrid polymer particles have an average particle diameter (D50) smaller than the average particle diameter (D50) of the acrylic polymer particles, the porous organic/inorganic composite coating layer having a heterogeneity in the composition morphology in the thickness direction may be more easily formed.

In one embodiment of the present disclosure, the average particle diameter (D50) of the hybrid polymer particles is 100 to 500 nm, and the average particle diameter (D50) of the acrylic polymer particles is 200 to 700 nm. More specifically, the average particle diameter (D50) of the hybrid polymer particles may be 200 to 400 nm, and the average particle diameter (D50) of the acrylic polymer particles may be 300 to 500 nm. In addition, the mixed weight ratio of the hybrid polymer particles and the acrylic polymer particles may be 8:2 to 2: 8.

The hybrid polymer particles may be prepared to refer to, for example, WO 2020/263936, and may be integrated with the reference of the present disclosure.

The fluorine-based polymer as insoluble in an electrolyte included in the mixed polymer particles may be a homopolymer of vinylidene fluoride, a copolymer of vinylidene fluoride and other polymerizable monomers, or a mixture of two or more thereof.
other polymerizable monomers may include at least one selected from the group consisting of tetrafluoroethylene, hexafluoropropylene, trifluoroethylene, chlorofluoroethylene, 1, 2 difluoroethylene, perfluoro(methylvinyl)ether, perfluoro(ethylvinyl)ether, perfluoro(propylvinyl)ether, perfluoro((1,3 dioxole), perfluoro (2,2-dimethyl-1,3-dioxole), trichloroethylene, and vinyl fluoride, but are not limited thereto. In particular, the fluorine-based polymer may be a copolymer of vinylidene fluoride and hexafluoropropylene. The content of vinylidene fluoride and other polymerizable monomers may be 1 to 20% by weight of the copolymer but is not limited thereto.

In the present disclosure, the content of the comonomer in the PVDF-based polymer can be measured by 1H-NMR method using Varian 500 MHz. For detailed measurement methods, refer to Journal of Materials Chemistry, 2012, 22, 341 or AMT-3412-0k. For the confirmation of the NMR spectrum, suitable equipment such as Bruker Avance III HD 700 MHz NMR or Varian 500 MHz NMR may be used.

The acrylic polymer constituting the hybrid polymer particles and the acrylic polymer constituting the acrylic polymer particles may each independently include an alkyl methacrylate repeating unit having an alkyl group having 1 to 18 carbon atoms but are not limited thereto.

However, the acrylic-based polymer comprised in the mixed polymer particles does not include styrene repeating unit, and the acrylic-based polymer comprised in the acrylic-based polymer particles includes styrene repeating unit.

In one embodiment of the present disclosure, the Tg of the acrylic polymer included in the hybrid polymer particles may be more than 10°C lower than the Tg of the acrylic polymer included in the acrylic polymer particles. Since the lower the Tg of the acrylic polymer, the better the adhesion force, and thus the lower the Tg of the acrylic polymer included in the hybrid polymer particles, the higher the dry/wet adhesion force of the hybrid polymer particles to the electrodes.

More specifically, the Tg of the acrylic polymer included in the hybrid polymer particles may be 10°C to 30°C, and the Tg of the acrylic polymer included in the acrylic polymer particles may be 30°C to 50°C. Although the acrylic polymer included in the hybrid polymer particles has a low Tg, the particulate form even at room temperature due to the mixed fluorine-based polymer can be maintained. In addition, when the Tg of the acrylic polymer included in the acrylic polymer particles is selected to be higher than or equal to room temperature, the particle shape may be maintained at room temperature to express electrode adhesion force during lamination with the electrode.

The acrylic polymer may have a glass transition temperature (Tg) of 40°C or less.

More specifically, the acrylic-based polymer is a polymer having a carboxylic acid ester as a repeating unit and may preferably be a (meth)acrylate ester. Specific examples of such (meth)acrylic acid ester may include, for example, (meth)methyl acrylate, (meth)ethyl acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, and the like, and may be at least one selected among them. Among these, at least one selected from methyl (meth)acrylate, ethyl (meth)acrylate, and 2-ethylhexyl (meth)acrylate is preferable, and methyl (meth)acrylate is particularly preferable.

The porous organic/inorganic composite coating layer may include the particulate binder resin in an amount of 1% to 30% by weight of the porous organic/inorganic composite coating layer but is not limited thereto.

The inorganic particles included in the porous organic/inorganic composite coating layer are not particularly limited as long as they are electrochemically stable. That is, the inorganic particles are not particularly limited as long as oxidation and/or reduction reactions do not occur in the operating voltage range of the applied electrochemical device (e.g., 0 to 5 V based on Li/Li⁺). In particular, when inorganic particles having an ion transport ability are used, performance can be improved by increasing ion conductivity in the electrochemical device. In addition, when inorganic particles having a high dielectric constant are used as the inorganic particles, the ionic conductivity of the electrolyte may be improved by contributing to an increase in the degree of dissociation of an electrolyte salt, such as a lithium salt, in a liquid electrolyte.

For the above reasons, the inorganic particles may include inorganic particles having a high dielectric constant of 5 or more or 10 or more, inorganic particles having lithium ion transport ability, or a mixture thereof. Non-limiting examples of inorganic particles having a dielectric constant of 5 or more include BaTiO₃, Pb(Zr,Ti)O₃ (PZT), Pb₁₋ₓLaₓZr_{1-y}Ti_{y}O₃ (PLZT, where, 0<x<1, 0<y<1), Pb (Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, SiC, TiO₂, etc., alone or a mixture of two or more. In addition, when the above-described high dielectric constant inorganic particles and the inorganic particles having lithium ion transport ability are mixed, their synergistic effect may be doubled.

Non-limiting examples of the inorganic particles having the lithium ion transport ability include lithium phosphate (Li₃PO₄), lithium titanium phosphate (LiₓTi_{y}(P0₄)₃, 0<x<2, 0<y<3), lithium aluminum titanium phosphate (LiₓAl_{y}Ti_{z})(PO₄)₃, 0<x<2, 0<y<1, 0<z<3), (LiAlTiP)ₓO_{y}-based glass (0<x<4, 0<y<13), such as, 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), such as, Li_{3.25}Ge_{0.25}P_{0.75}S₄, etc., lithium nitride (LiₓN_{y}, 0<x<4, 0<y<2), such as, Li₃N, SiS₂-based glass (LiₓSi_{y}S_{z}, 0<x<3, 0<y<2, 0<z<4), such as, Li₃PO₄-Li₂S-SiS₂, P₂S₅-based glass (LiₓP_{y}S_{z}, 0<x<3, 0<y<3, 0<z<7), such as, LiI-Li₂S-P₂S₅, etc., or a mixture thereof.

In the porous organic/inorganic composite coating layer, the content ratio of the inorganic particles is determined in consideration of the thickness, pore size, and porosity of the finally prepared porous organic/inorganic composite coating layer, but the inorganic particles may be included in a range of 70% to 99% by weight based on 100% by weight of the porous coating layer based on the weight ratio. When the content of the inorganic particles is less than 70% by weight, heat resistance may be reduced. On the other hand, when the content of the inorganic particles is too large, the amount of the binder is relatively too small, and thus the adhesion force of the porous coating layer may be degraded.

According to a specific embodiment of the present disclosure, the inorganic particle size of the porous organic/inorganic composite coating layer is not limited but may be in the range of 0.001 to 10 µm as much as possible for the formation of a coating layer having a uniform thickness and an appropriate porosity. For example, within the above range, the inorganic particle size is in a range of 200 nm to 3 µm, 200 nm to 2 µm, or 200 nm to 1 µm. When the inorganic particle size satisfies this range, dispersibility is maintained, so it is easy to control the physical properties of the separator, and the increase in the thickness of the porous organic/inorganic composite coating layer can be avoided, so that mechanical properties can be improved. Also, due to the excessively large pore size, the probability of an internal short circuit occurring during battery charging and discharging is low.

On the other hand, in one embodiment of the present disclosure, the separator, including the porous organic/inorganic composite coating layer, may be prepared by mixing binder particles and inorganic particles with an aqueous dispersion medium to prepare a slurry for forming a coating layer, and then coating the slurry on at least one side surface of a polymer substrate.

As the coating method, dip coating, die coating, roll coating, comma coating, or a mixture thereof may be used.

In one embodiment of the present disclosure, the aqueous dispersion medium may include at least one of water and an alcohol having 1 to 5 carbon atoms. For example, the aqueous dispersion medium may include a mixture of water and isopropyl alcohol. By using the aqueous dispersion medium in the above production method, the binder particles are dispersed while maintaining the particle shape in the aqueous dispersion medium without being dissolved in the dispersion medium. For this reason, the binder particles can maintain a particle state in the prepared porous organic/inorganic composite coating layer and do not enter the pores of the polymer substrate.

On the other hand, in one embodiment of the present disclosure, the slurry for forming the coating layer is preferably controlled so that the concentration of the solids, excluding the dispersion medium, is in the range of 20% to 50% by weight. It is advantageous to obtain a separator having a porous organic/inorganic composite coating layer having the heterogeneity in the composition morphology of the present disclosure by controlling the concentration of solid, the average particle diameter, and the content ratio of the injected binder particles within the above range.

On the other hand, the separator of this disclosure can be applied to an electrochemical device. The electrochemical device may include a negative electrode and a positive electrode, and the separator may be interposed between the negative electrode and the positive electrode. The electrochemical device includes all devices that perform an electrochemical reaction, and specific examples thereof include all kinds of primary cells, secondary cells, fuel cells, solar cells, or capacitors. In particular, a lithium ion secondary battery, including a lithium metal secondary battery, a lithium ion secondary battery, a lithium polymer secondary battery, or a lithium ion polymer secondary battery among the secondary batteries is preferable.

In a specific embodiment, according to the present disclosure, the electrochemical device may be manufactured according to a conventional method known in the art. According to an embodiment of the present disclosure, the electrochemical device may be configured by a method of interposing the above-described separator between the positive electrode and the negative electrode. In addition, the electrochemical device may be manufactured by loading an electrode assembly assembled by laminating a negative electrode, a separator, and a positive electrode in a battery case and then injecting an electrolyte.

In one embodiment of the present disclosure, the electrode is not particularly limited, and the electrode active material may be prepared in the form of being adhered to the electrode current collector according to a conventional method known in the art. As non-limiting examples of the positive electrode active material among the electrode active materials, conventional positive electrode active material that may be used in positive electrode of conventional electrochemical device may be used, and in particular, lithium manganese oxide, lithium cobalt oxide, lithium nickel oxide, lithium iron oxide, or lithium intercalation material such as a composite oxide formed by a combination thereof is preferable. As non-limiting examples of the negative electrode active material, a conventional negative electrode active material that may be used in the negative electrode of a conventional electrochemical device may be used, and in particular, lithium metal or lithium alloy, lithium adsorption materials such as carbon, petroleum coke, activated carbon, graphite, or other carbons are preferable. As non-limiting examples of the positive electrode current collector include a foil made of aluminum, nickel, or a combination thereof, and non-limiting examples of the negative electrode current collector include a foil made of copper, gold, nickel, or a copper alloy or a combination thereof.

The electrolyte solution that can be used in the present disclosure is a salt having the same structure as A⁺B⁻, and A⁺ includes ions formed of alkali metal cations such as Li⁺, Na⁺, K⁺, or a combination thereof, or B⁻ includes PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof. In the electrolyte, the salt may be dissolved or dissociated in an organic solvent or an organic solvent consisting of a mixture thereof, including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), and gamma butyrolactone (γ-butyrolactone), but is not limited thereto.

The electrolyte injection may be performed at an appropriate stage in the battery manufacturing process according to the manufacturing process and required physical properties of the final product. That is, it may be applied before assembling the battery or in the final stage of assembling the battery. As a process for applying the electrode assembly of the present disclosure to a battery, in addition to the general process of winding, lamination, stack, and folding processes of a separator and an electrode, are possible.

### Embodiments of the present disclosure

Hereinafter, examples will be given to describe the present disclosure in detail. However, the embodiments according to the present disclosure may be modified in various other forms, and the scope of the present disclosure should not be construed as being limited to the embodiments described below. The embodiments of the present disclosure are provided to more completely explain the present disclosure to those of ordinary skilled in the art.

### Example

### Example 1

8.2 parts by weight of hybrid polymer particles [Arkema, LBG4330LX, D50: 300 nm, hybrid polymer particles that a copolymer in which VDF and HFP are polymerized in a molar ratio of 95:5 and a copolymer of ethyl acrylate and methyl methacrylate (Tg 20°C) are mixed in a weight ratio of 7:3], 8.2 parts by weight of acrylic polymer particles [LGC, AD-S11, D50: 400 nm, copolymer of styrene and butyl acrylate (Tg 40°C)], 80 parts by weight of inorganic particles (Al₂O₃, D50: 500 nm) were added to water and dispersed to prepare a dispersion (35% by weight of solid concentration) for forming a porous coating layer.

Next, prepare a polyethylene material separator substrate (porosity 40%, thickness 9 µm), apply the dispersion on both sides of the separator substrate by bar coating using a doctor blade, and then dry with hot air at 50°C using a heat gun to form a porous coating layer having a thickness of 12 µm based on the thickness of one side.

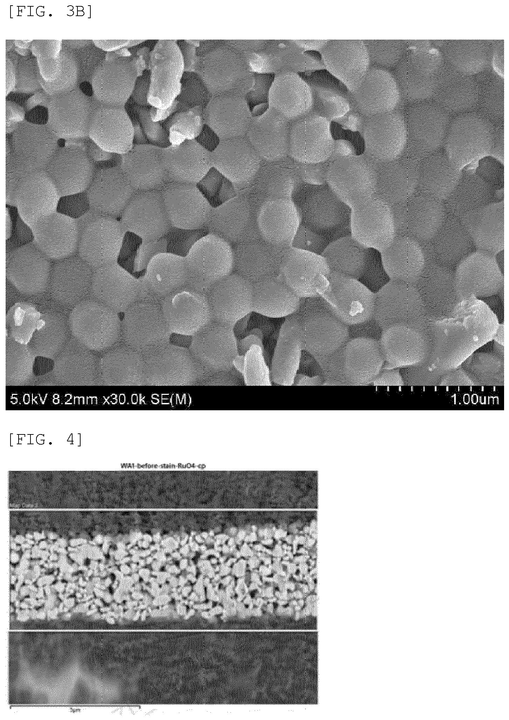

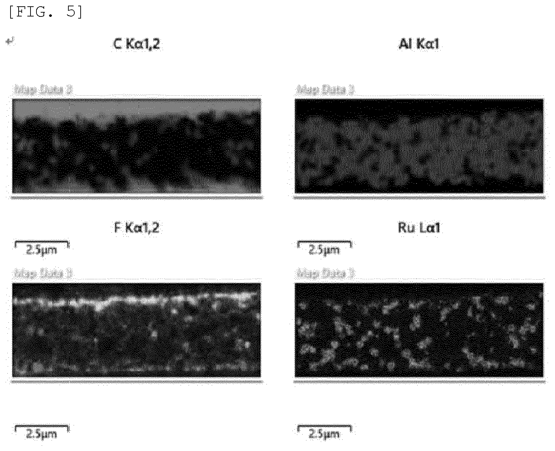

FIG. 4 is an SEM image of a cross-section of the separator according to Example 1, and FIG. 5 is an EDS image of a cross-section of the separator according to Example 1. Referring to FIG. 5, the distribution of the hybrid polymer particles included in the porous organic/inorganic composite coating layer may be confirmed from the image of F Kα1,2 by analyzing the distribution of the F element contained in the hybrid polymer particles. Meanwhile, the distribution of the acrylic polymer particles may be confirmed from the image of Ru Lα1 in which the distribution of Ru element is analyzed after dyeing with RuO₄.

### Example 2

A porous coating layer was formed in the same manner as in Example 1, except that the content of the hybrid polymer particles was 10.2 parts by weight, the content of the acrylic polymer particles was 10.2 parts by weight, and the content of the inorganic particles was changed to 75 parts by weight to prepare a dispersion (35% by weight) for forming the porous coating layer.

### Comparative Example 1

A porous coating layer was formed in the same manner as in Example 1, except that a dispersion (35% by weight of solid concentration) for forming a porous coating layer was prepared by changing the content of the acrylic polymer particles to 16.4 parts by weight without adding the hybrid polymer particles.

### Comparative Example 2

A porous coating layer was formed in the same manner as in Example 1, except that a dispersion (35% by weight of solid concentration) for forming a porous coating layer was prepared by changing the content of the hybrid polymer particles to 16.4 parts by weight without adding acrylic polymer particles.

### Comparative Example 3

A porous coating layer was formed in the same manner as in Example 1, except that a dispersion (35% by weight of solid concentration) for forming a porous coating layer was prepared by changing copolymer of ethyl acrylate and methyl metacrylate to copolymer of styrene and butyl metacrylate in the hybrid polymer particles.

### Comparative Example 4

A porous coating layer was formed in the same manner as in Example 1, except that a dispersion (35% by weight of solid concentration) for forming a porous coating layer was prepared by changing copolymer of styrene and butyl acrylate to copolymer of butyl acrylate in the acrylic polymer particles.

### Comparative Example 5

A porous coating layer was formed in the same manner as in Example 1, except that a dispersion (35% by weight of solid concentration) for forming a porous coating layer was prepared by changing copolymer of ethyl acrylate and methyl metacrylate to copolymer of styrene and butyl metacrylate in the hybrid polymer particles and changing copolymer of styrene and butyl acrylate to copolymer of butyl acrylate in the acrylic polymer particles.

### Measurement of average particle diameter D50

D50 can be defined as the particle size based on 50% of the particle size distribution and was measured using a laser diffraction method.

### Measurement of Tg

Using DSC, the Tg of a 25 mg sample was measured in a nitrogen atmosphere under conditions of a temperature increase rate of 10°C/min in a range of room temperature to 300°C.

### Wet adhesion specimen production

The separator and the positive electrode obtained in each of Examples and Comparative Examples were laminated, impregnated in 1.0 g of the electrolyte (content ratio of ethylene carbonate: ethyl methyl carbonate = 7:3, LiPF₆ 1 M), and left in room temperature for 24 hours. Thereafter, a specimen was prepared by lamination using a hot press. At this time, the pressurization was performed at 70°C and 5 kgf for 5 minutes. The size of the specimen was 2 cm x 6 cm.

The positive electrode was prepared as follows. LiNi_{0.8}Co_{0.1}Mn_{0.1}O₂, PVdF, and carbon black were mixed in a weight ratio of 97.0:1.5:1.5 and dispersed in 2-methyl-2-pyrrolidone to prepare a positive electrode slurry, coated on an aluminum current collector, and then dried and press-rolled to prepare a positive electrode.

### Dry adhesion specimen production

The separator and the negative electrode obtained in each Examples and Comparative Examples were laminated using a hot press to prepare a specimen. At this time, the pressurization was performed at 60°C and 6.5 MPa for 1 second. The size of the specimen was 2 cm x 6 cm.

The negative electrode was prepared as follows. Graphite, SBR, and CMC were mixed in a weight ratio of 89.2:10:0.8 and dispersed in distilled water to prepare a negative electrode slurry, coated on a copper current collector, and dried and press-rolled to prepare a negative electrode.

### Measurement of adhesion force with electrodes

Wet adhesion force and dry adhesion force of the separator were evaluated using each specimen prepared above, and the results are summarized in Table 1 below. After each specimen was prepared, the adhesion force was measured after leaving the specimens at room temperature for 1 hour. Adhesion force was measured by peeling at an angle of 180° for dry and 90° for wet using a tensile tester (UTM equipment).

**[Table 1]**

| | Exam ple 1 | Exa mpl e 2 | Compa rativ e Examp le 1 | Compar ative Exampl e 2 | Compar ative Exampl e 3 | Compara tive Example 4 | Comparative Example 5 |
|---|---|---|---|---|---|---|---|
| Wet adhesi on force (gf/20 mm) | 25 | 35 | 1 | 15 | 3 | 5 | 2 |
| Dry adhesi on force (gf/20 mm) | 45 | 55 | 60 | 5 | 10 | 7 | 7 |

As can be seen in Table 1, the separator, according to the present disclosure, was confirmed to have good wet and dry adhesion force with the electrode. In the case of Comparative Example 1, the dry adhesion force is high, but wet adhesion is low, so when applied to an actual battery, battery performance may be deteriorated. Comparative Example 2 has a problem in that the adhesion force is lowered during the electrode assembly manufacturing process due to low dry adhesion force. Furthermore, in the case of Comparative Examples 3 to 5,

The adhesion force is reduced in the manufacturing process of the electrode assembly and battery performance may get low in case of applying a real battery because all of the wet adhesion force and the dry adhesion force are low.

However, the separator, according to the Example, exhibits both wet and dry adhesion force at a high level, thereby exhibiting excellent electrochemical effects during the electrode assembly manufacturing process and battery operation.

## Claims

1. A separator for an electrochemical device, the separator comprising a porous polymer substrate and a porous organic/inorganic composite coating layer formed on at least one side of the porous polymer substrate,
wherein the porous organic/inorganic composite coating layer comprises particulate binder polymers and inorganic particles,
the particulate binder polymers comprise hybrid polymer particles of a fluorine-based polymer and an acrylic polymer and acrylic polymer particles, and
the acrylic-based polymer comprised in the mixed polymer particles does not include styrene repeating unit, the acrylic-based polymer comprised in the acrylic-based polymer particles includes styrene repeating unit,
the porous organic/inorganic composite coating layer has a heterogeneity in composition morphology in a thickness direction such that
a content ratio of hybrid polymer particles/acrylic polymer particles present on a surface portion opposite to a surface in contact with the porous polymer substrate is greater than a content ratio of hybrid polymer particles/acrylic polymer particles present inside the porous organic/inorganic composite coating layer.

2. The separator of claim 1, wherein the porous organic/inorganic composite coating layer has a heterogeneity in composition morphology in a thickness direction such that
a content of hybrid polymer particles present on a surface portion opposite to a surface in contact with the porous polymer substrate is greater than the content of hybrid polymer particles present inside the porous organic/inorganic composite coating layer.

3. The separator of claim 1, wherein the porous organic/inorganic composite coating layer has a heterogeneity in composition morphology in a thickness direction, wherein a content of acrylic polymer particles present on a surface portion opposite to a surface in contact with the porous polymer substrate is greater than a content of acrylic polymer particles present inside the porous organic/inorganic composite coating layer.

4. The separator of claim 1, wherein an average particle diameter (D50) of the hybrid polymer particles is smaller than that of the acrylic polymer particles.

5. The separator of claim 4, wherein the hybrid polymer particles have an average particle diameter (D50) in a range of 100 to 500 nm, and the acrylic polymer particles have an average particle diameter (D50) in a range of 200 to 700 nm.

6. The separator of claim 1, wherein a mixed weight ratio of the hybrid polymer particles and the acrylic polymer particles is 8:2 to 2:8.

7. The separator of claim 1, wherein the acrylic polymer included in the hybrid polymer particles has a glass transition temperature Tg which is more than 10°C lower than the glass transition temperature Tg of the acrylic polymer comprised in the acrylic polymer particles.

8. The separator of claim 7, wherein the acrylic polymer included in the hybrid polymer particles has a glass transition temperature Tg of 10°C to 30°C, and the acrylic polymer included in the acrylic polymer particles has a glass transition temperature Tg of 30°C to 50°C.

9. The separator of claim 1, wherein the fluorine-based polymer is a homopolymer of vinylidene fluoride, a copolymer of vinylidene fluoride and other polymerizable monomers, or a mixture of two or more thereof.

10. The separator of claim 9, wherein the polymerizable monomers comprise at least one selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, perfluoro(1,3 dioxole), perfluoro (2,2-dimethyl-1,3-dioxole), trichloroethylene, and vinyl fluoride.

11. The separator of claim 9, wherein the fluorine-based polymer is a copolymer of vinylidene fluoride and hexafluoropropylene.

12. The separator of claim 9, wherein the polymerizable monomer is contained in an amount of 1% to 20% by weight relative to the copolymer.

13. The separator of claim 1, wherein the acrylic polymer constituting the hybrid polymer particles and the acrylic polymer constituting the acrylic polymer particles each independently comprise an alkyl (meth)acrylate repeating unit having an alkyl group having 1 to 18 carbon atoms.

14. The separator of claim 1, wherein the porous organic/inorganic composite coating layer comprises the particulate binder polymers in an amount of 1% to 30% by weight with respect to the weight of the porous organic/inorganic composite coating layer.

15. The separator of claim 1, wherein the inorganic particles have an average particle diameter (D50) in a range of 200 nm to 3 µm.

16. The separator of claim 1, wherein the porous organic/inorganic composite coating layer is formed by coating and drying a slurry in which the particulate binder polymers and the inorganic particles are dispersed in an aqueous dispersion medium on at least one surface of the porous polymer substrate.

17. An electrochemical device comprising a negative electrode, a positive electrode, and a separator interposed between the positive electrode and the negative electrode, wherein the separator is according to any one of claims 1-16.

18. The electrochemical device of claim 17, wherein the electrochemical device is a lithium secondary battery.
